# EUROPEAN PATENT APPLICATION

(11) **EP 0 754 598 A1**
(43) Date of publication of application: **22.01.1997**
(21) Application number: 96830370.1
(22) Date of filing: 28.06.1996
(51) Int. Cl.: B60R 16/00

(54) **Steering wheel having a device for the closure of an electric circuit incorporated within the wheel, particularly for operating the electric horn**

(30) Priority: 21.07.1995 IT RM950175 U
(71) Applicant: Rainaldi, Alessandro, 00198 Roma (IT)
(72) Inventor: Rainaldi, Alessandro, 00198 Roma (IT)
(74) Representative: Iannone, Carlo Luigi

(57) **Abstract**

The present invention relates steering wheel having a device for the closure of an electric circuit incorporated within the wheel, particularly for operating the electric horn, comprising a first (1) and a second (3) contact element respectively connected with the two contacts of the electric horn circuit, provided within the wheel (2) of the steering wheel and extending for at least a part of the same wheel, one of said elements being integral with a deformable element (4) provided within said wheel.

## Description

The present invention relates to a steering wheel having a device for the closure of an electric circuit incorporated within the wheel, particularly for operating the electric horn.

More particularly, the invention relates to a wheel wherein the device for operating the electric horn is provided in such a way to avoid that the hands must be removed from the steering wheel in order to sound the horn when necessary.

Obviously, the same solution suggested according to the invention can be used for any other kind of circuit of the vehicle, e.g. indicators, operation of the windscreen wipers, lighting on of the lights, headlamp signaller, etc.

As it is well known, at present in most cases the operating device of the electric horn, as well as the other operation devices, is provided centrally on the steering wheel of the vehicles and in order to operate the same it is necessary to act by the pressure of part of one of the two hands, said hand being usually used to control the steering wheel.

Another kind of solution usually used is the one providing a lever placed laterally with respect to the steering wheel and causing the sound in case of lateral thrust.

As it is well evident, each one of the solution used up to now requires in most cases, if not always, the motion of one hand from he steering wheel in order to be able to operate the electric horn.

It is well evident that this kind of solution involves different problems either practical problems and safety problems.

In fact, it is often necessary to use the electric horn in case of sudden danger, so that the motion of the hand determines a retard in performing this action.

Furthermore, just in view of the dangerous situation, the need of removing the hand from the steering wheel determines a further risk, particularly for not very skilled drivers.

Further it occurs that it is impossible to sound the horn also when it would be advisable, for example when one is driving on mountain roads, when it is necessary and advisable to maintain both hands on the steering wheel in view of the difficult driving conditions, but when it would be at the same time advisable to sound the horn in order to indicate the presence to other vehicles.

In view of the above, it is well evident how it is advisable to be able to have at disposal a device as proposed according to the present invention that allows to sound the electric horn without removing the hands from the steering wheel and without the need of interrupting the driving action.

These and results are obtained according to the present invention by the realisation of a steering wheel for vehicles providing the operating device of the electric horn on the wheel of the steering wheel, said device being operable by the hand held in the same position it had during the regular driving, in such a way to remarkably reduce reaction time and to avoid any further danger due to the need of removing the hand from the steering wheel.

It is therefore specific object of the present invention a steering wheel having a device for the closure of an electric circuit incorporated within the wheel, particularly for operating the electric horn, comprising a first and a second contact element respectively connected with the two contacts of the electric horn circuit, provided within the wheel of the steering wheel and extending for at least a part of the same wheel, one of said elements being integral with a deformable element provided within said wheel.

According to a preferred embodiment of the steering wheel according to the invention, said contact elements extends along all the circumference of the wheel.

Always according to the invention, said contact elements can be provided only in one or more parts of the wheel.

Still according to the invention, insulating elements can be provided on said contact elements for the interruption of them in determined points.

Further, according to the invention, return means for returning said contact elements in the rest position can be provided.

Preferably, according to the invention, said deformable element is made up of sponge or other material having a similar consistence.

Always according to the invention, between said deformable element and said contact element connected with the same, an intermediate element can be provided, said intermediate element being preferably comprised of a plurality of single cylinders provided outside the inner circular part of the steering wheel.

The present invention will be now described, for illustrative but not limitative purposes, according to its preferred embodiments, with particular reference to the figures of the enclosed drawings, wherein:
figure 1 diagramatically shows a first embodiment of the steering wheel according to the invention;
figure 2 is a section view taken along line I-I of figure 1;
figure 3 diagramatically shows a second embodiment of a steering wheel according to the invention; and
figure 4 is a section view taken along line IV-IV of figure 3.

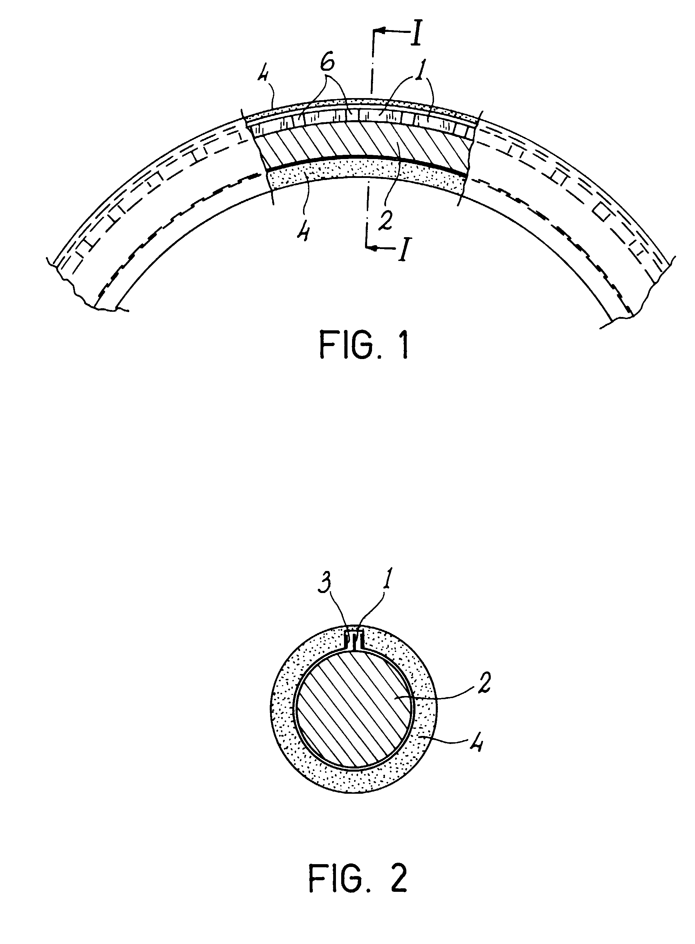

Referring first to figures 1 and 2, it can be noted a steering wheel I according to the invention comprising a reed -shaped contact element 1 provided integrally with the wheel 2 of the steering wheel and a reed - shaped contact element 3 integral with the sponge 4 outside the wheel 2.

In the embodiment shown in said figures also the insulating elements 6 are shown, said elements dividing the steering wheel in sectors, but it is obvious that the assembly can be also realised in such a way to have contact elements realised as a sole part.

It is well evident that with the hand in the regular position it is possible to directly act on the electric horn, operating the same without the need of removing it.

Furthermore, as already said, it is also possible to provide the contact just in some parts of the wheel 2 since the motion of the sponge 4 allows to close the electric circuit of the electric horn wherever it is placed.

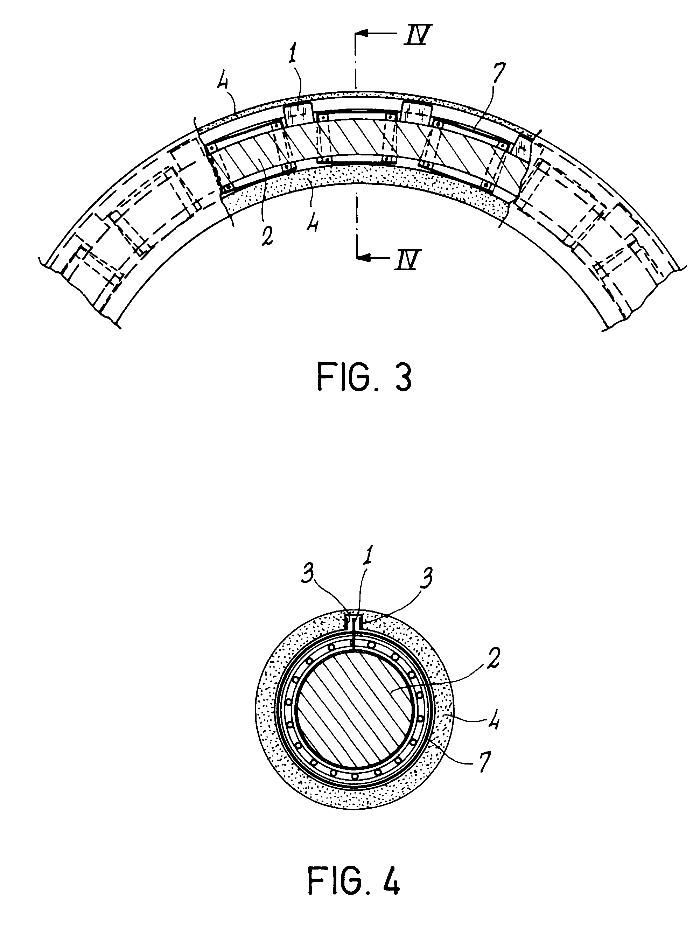

Coming now to observe figures 3 and 4, it can be noted a second embodiment of the steering wheel according to the invention wherein outside the wheel 2, an element 7 is provided, said element 7 having cylinders and allowing to uniformly transmitting the action on the electric horn by the sponge 4.

It is further provided a return spring in order to bring the contact back in the rest position.

It must anyway taken into consideration that the various elements comprising the steering wheel according to the invention can be realised and combined in a different way.

Furthermore, as already said, the same solution can be adopted for any king of circuit of the vehicle, e.g. indicators, operation of the windscreen wipers, lighting on of the lights, headlamp signaller, etc.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Steering wheel having a device for the closure of an electric circuit incorporated within the wheel, particularly for operating the electric horn, characterized in that it comprises a first and a second contact element respectively connected with the two contacts of the electric horn circuit, provided within the wheel of the steering wheel and extending for at least a part of the same wheel, one of said elements being integral with a deformable element provided within said wheel.

2. Steering wheel having a device for the closure of an electric circuit incorporated within the wheel, particularly for operating the electric horn according to claim 1, characterized in that said contact elements extends along all the circumference of the wheel.

3. Steering wheel having a device for the closure of an electric circuit incorporated within the wheel, particularly for operating the electric horn according to claim 1, characterized in that said contact elements are provided only in one or more parts of the wheel.

4. Steering wheel having a device for the closure of an electric circuit incorporated within the wheel, particularly for operating the electric horn according to one of the preceding claims, characterized in that insulating elements are provided on said contact elements for the interruption of them in determined points.

5. Steering wheel having a device for the closure of an electric circuit incorporated within the wheel, particularly for operating the electric horn according to one of the preceding claims, characterized in that return means for returning said contact elements in the rest position are provided.

6. Steering wheel having a device for the closure of an electric circuit incorporated within the wheel, particularly for operating the electric horn according to one of the preceding claims, characterized in that said deformable element is made up of sponge or other material having a similar consistence.

7. Steering wheel having a device for the closure of an electric circuit incorporated within the wheel, particularly for operating the electric horn according to one of the preceding claims, characterized in that between said deformable element and said contact element connected with the same, an intermediate element is provided, said intermediate element being preferably comprised of a plurality of single cylinders provided outside the inner circular part of the steering wheel.

8. Steering wheel having a device for the closure of an electric circuit incorporated within the wheel, particularly for operating the electric horn according to each one of the preceding claims, substantially as illustrated and described.
